(19) Europäisches Patentamt
European Patent Office
Office européen des brevets

(11) EP 3 091 346 A1

(12) EUROPÄISCHE PATENTANMELDUNG

(43) Veröffentlichungstag:
09.11.2016 Patentblatt 2016/45

(51) Int Cl.:
G01N 13/02 (2006.01)          B01L 3/00 (2006.01)

(21) Anmeldenummer: 15166959.5

(22) Anmeldetag: 08.05.2015

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA

(71) Anmelder: Krüss GmbH
22453 Hamburg (DE)

(72) Erfinder:
• Gerber, Carsten
  22967 Tremsbüttel (DE)
• Schönfeld, Sven
  24558 Wakendorf (DE)
• Bergmann, Tom
  22453 Hamburg (DE)

(74) Vertreter: Hauck Patentanwaltspartnerschaft
mbB
Kaiser-Wilhelm-Straße 79-87
20355 Hamburg (DE)

(54) PROBENGEFÄSS UND VERFAHREN ZUR MESSUNG EINER GRENZFLÄCHENSPANNUNG

(57) Probengefäß zur Messung einer Grenzflächenspannung zwischen einer schwereren Flüssigkeit und ei-ner leichteren Flüssigkeit nach einem Spinning Drop-Verfahren mit

• einem transparenten Röhrchen, das zur Rotation um seine Längsachse mit einer Drehzahl von 200 Umdrehungen pro Minute oder mehr auslegt ist,

• einem Stopfen, mit dem ein Ende des transparenten Röhrchens verschließbar ist, und

• einem in dem transparenten Röhrchen verschieblichen Kolben.

Fig. 1

**Beschreibung**

Die Erfindung betrifft ein Probengefäß mit einem transparenten Röhrchen, das zur Rotation um seine Längsachse mit einer Drehzahl von 200 Umdrehungen pro Minute oder mehr auslegt ist, und einem Stopfen, mit dem ein Ende des Röhrchens verschließbar ist. Derartige Probengefäße werden zur Messung einer Grenzflächenspannung zwischen zwei Flüssigkeiten nach dem sogenannten Spinning Drop-Verfahren eingesetzt. Die Erfindung betrifft außerdem ein entsprechendes Messverfahren.

Eine exakte Messung von Grenzflächenspannungen zwischen zwei Flüssigkeiten ist auf vielen technischen Anwendungsfeldern von Bedeutung, beispielsweise zur Charakterisierung von Emulsionen. Das Spinning Drop-Verfahren hat sich insbesondere bei relativ geringen Grenzflächenspannungen bewährt. Bei diesem bekannten Verfahren werden die beiden Flüssigkeiten in ein Probengefäß eingebracht und gemeinsam mit dem Probengefäß in schnelle Rotation versetzt. Dadurch bildet die Flüssigkeit mit der geringeren spezifischen Dichte (nachfolgend als leichtere Flüssigkeit bezeichnet) innerhalb des Probengefäßes einen langgestreckten, annähernd zylindrischen Tropfen, der allseitig von der Flüssigkeit mit der größeren spezifischen Dichte (nachfolgend als schwerere Flüssigkeit bezeichnet) umgeben ist. Der Durchmesser des langgestreckten Tropfens wird mit einer optischen Messeinrichtung erfasst und erlaubt eine Bestimmung der Grenzflächenspannung y auf Grundlage des folgenden mathematischen Zusammenhangs:

$$\gamma = \tfrac{1}{4}\, r^3\, \omega^2\, (\rho_H - \rho_L),$$

wobei r den Radius des langgestreckten Tropfens, $\omega$ die Winkelgeschwindigkeit der Rotationsbewegung, $\rho_H$ die spezifische Dichte der schwereren Flüssigkeit und $\rho_L$ die spezifische Dichte der leichteren Flüssigkeit bezeichnet. Das Verfahren eignet sich insbesondere für geringe Grenzflächenspannungen.

Voraussetzung für eine einwandfreie Messung ist eine ordnungsgemäße Präparation der beiden Flüssigkeiten in dem Probengefäß. Insbesondere sollten Durchmischungen der beiden Flüssigkeiten ebenso vermieden werden wie Lufteinschlüsse. Unerlässlich ist auch eine gleichmäßige und vibrationsfreie Rotation des Probengefäßes.

Es sind unterschiedliche Probengefäße und Verfahren zum Einbringen der beiden Flüssigkeiten in die Probengefäße bekannt geworden, die diesen Anforderungen gerecht werden. Ein bekanntes Spinning Drop-Tensiometer, das von der Anmelderin unter der Bezeichnung SITE100 angeboten wird, verwendet als Probengefäß ein nicht ohne weiteres aus dem Tensiometer entnehmbares Glasröhrchen, das an beiden Enden drehbar gelagert ist. Die beiden Enden des Glasröhrchens sind offen, sodass die schwerere Flüssigkeit über an die offenen Enden des Glasröhrchens angrenzende Hohlräume in das Glasröhrchen eingebracht werden kann. Hierzu sind Dichtungen im Bereich der Drehlager vorgesehen. Über dieselben Hohlräume kann das Glasröhrchen auch zum Reinigen gespült werden. Bei dem bekannten Tensiometer wird die leichtere Flüssigkeit mit Hilfe einer Spritze in das Glasröhrchen eingebracht. Hierzu wird mit einer Kanüle ein Septum durchstochen, das nahe einer Öffnung des Glasröhrchens in eine Wandung des Hohlraums eingesetzt ist. Ein Tropfen der leichteren Flüssigkeit wird während einer langsamen Rotation des Glasröhrchens etwa in dessen Mitte erzeugt und dann durch schnelles Zurückziehen der Kanüle von dieser gelöst. Dabei können Verwirbelungen auftreten, die zur Bildung mehrerer Tröpfchen führen und die Messung erschweren können.

Ein anderes bekanntes Tensiometer verwendet Probengefäße, die zum Einbringen der beiden Flüssigkeiten aus dem Tensiometer entnommen werden. Die Probengefäße sind in der Druckschrift CN 201583475 U beschrieben. Sie weisen ein Glasröhrchen auf, das an beiden Enden mit speziellen Stopfen verschlossen wird. Nach dem Einsetzen eines ersten Stopfens wird zunächst die schwerere Flüssigkeit eingebracht, in der Regel unter Zuhilfenahme einer Spritze mit einer Kanüle. Anschließend wird die leichtere Flüssigkeit eingebracht, in der Regel ebenfalls mit einer Spritze mit einer Kanüle. Die leichtere Flüssigkeit wird etwa in der Mitte des Glasröhrchens an einer Innenseite von dessen Wandung abgelegt. Anschließend wird das Glasröhrchen mit einem zweiten Stopfen verschlossen.

Davon ausgehend ist es die Aufgabe der Erfindung, ein Probengefäß zur Messung einer Grenzflächenspannung zur Verfügung zu stellen, mit dem die Präparation der Proben vereinfacht wird, sowie ein entsprechendes Verfahren zur Messung einer Grenzflächenspannung.

Diese Aufgabe wird gelöst durch das Probengefäß mit den Merkmalen Anspruchs 1. Vorteilhafte Ausgestaltungen sind in den sich anschließenden Unteransprüchen angegeben.

Das Probengefäß dient zur Messung einer Grenzflächenspannung nach einem Spinning Drop-Verfahren und hat

- ein transparentes Röhrchen, das zur Rotation um seine Längsachse mit einer Drehzahl von 200 Umdrehungen pro Minute oder mehr ausgelegt ist,

- einen Stopfen, mit dem ein Ende des transparenten Röhrchens verschließbar ist, und

- einen in dem transparenten Röhrchen verschieblichen Kolben.

Das Röhrchen dient zur Aufnahme der beiden Flüssigkeiten und ist transparent, um eine optische Beobachtung und Vermessung des rotierenden Tropfens zu ermöglichen. Hierzu kann das Röhrchen aus einem transparenten Kunststoffmaterial bestehen. Bevorzugt ist es jedoch aus Glas gefertigt.

Das Röhrchen ist an seinen beiden Enden offen, was das Befüllen mit der nachfolgend erläuterten Methode und eine besonders einfache Reinigung des Röhrchens erlaubt. Das Röhrchen weist einen Innendurchmesser auf, der in einem Längsabschnitt, in dem der Kolben verschieblich ist, konstant ist. Bevorzugt ist der Innendurchmesser über die gesamte Länge des Röhrchens konstant, das heißt auch an seinen beiden Enden bis hin zu den Öffnungen. Der Innendurchmesser des Röhrchens kann zum Beispiel im Bereich von 1 mm bis 10 mm liegen.

Das Röhrchen ist zur Rotation um seine Längsachse mit einer Drehzahl von 200 Umdrehungen pro Minute oder mehr ausgelegt, weist also eine hierzu ausreichende Festigkeit und Symmetrie auf. Bereits kleinere Unwuchten können bei hohen Drehzahlen zu Vibrationen führen, die eine präzise Messung behindern. Bevorzugt ist das Röhrchen für noch höhere Drehzahlen von beispielsweise 500, 1.000, 3.000, 5.000, 10.000, 15.000 oder sogar 20.000 Umdrehungen pro Minute oder mehr ausgelegt. Insbesondere bei hohen Grenzflächenspannungen kann es sinnvoll sein, mit hohen Drehzahlen zu arbeiten.

Der Stopfen ermöglicht ein einfaches Verschließen des Probengefäßes und ist zu diesem Zweck an die Abmessungen der Öffnung des Röhrchens angepasst. Er besteht zum Beispiel aus Kunststoff, insbesondere aus PTFE.

Der Kolben ist so genau in das Röhrchen eingepasst, dass durch Verschieben des Kolbens in dem Röhrchen eine Flüssigkeit aufgesaugt werden kann, ähnlich wie beim Aufziehen einer Spritze. Der Kolben kann die Form einer flachen Scheibe aufweisen mit einer Länge, die kleiner ist als ein Außendurchmesser des Kolbens. Der Kolben kann jedoch auch eine größere Länge aufweisen, etwa bis hin zur Gesamtlänge des Röhrchens, so dass der Kolben an seinem hinteren Ende zum Verschieben des Kolbens gehandhabt werden kann. Der Kolben kann zum Beispiel aus einem Kunststoffmaterial bestehen, zum Beispiel aus PTFE. Auch ein mehrteiliger Aufbau des Kolbens, zum Beispiel mit einem Dichtungsring, ist möglich. Grundsätzlich kann die Lage des Kolbens auf beliebige Art und Weise verändert werden, sowohl unmittelbar von Hand als auch unter Zuhilfenahme externer Hilfsmittel.

Bei der Erfindung kann das Probengefäß besonders einfach befüllt werden, indem durch Verlagern des Kolbens die Flüssigkeit in das Röhrchen eingesaugt wird. Dies stellt eine erhebliche Arbeitserleichterung dar, da für diesen Zweck keine gesonderte Spritze verwendet werden muss. Zudem kann durch Aufziehen der Flüssigkeit mit dem Probengefäß selbst Lufteinschlüssen entgegengewirkt werden, die sich beim Befüllen eines Röhrchens mit einer Spritze nicht immer vermeiden lassen.

Ein weiterer Vorteil der Erfindung ist, dass sich der Füllstand des Röhrchens durch Manipulieren des Kolbens auch nach dem Aufziehen der schwereren Flüssigkeit noch anpassen lässt, etwa nachdem die leichtere Flüssigkeit eingebracht wurde. Dadurch kann vor dem Verschließen des Probengefäßes ohne umständliches Nachfüllen fehlender oder Entnehmen überschüssiger Flüssigkeit stets ein optimaler Füllstand eingestellt werden.

In einer Ausgestaltung weist das Probengefäß eine Kolbenstange auf, die lösbar mit dem Kolben verbunden ist. In diesem Fall kann die Lage des Kolbens durch Bewegen der Kolbenstange verändert werden. Um eine Flüssigkeit in das Röhrchen aufzunehmen, kann der Kolben insbesondere durch Ergreifen und Herausziehen der Kolbenstange zurückgezogen werden. Die lösbare Verbindung zwischen Kolbenstange und Kolben erlaubt es, die Kolbenstange anschließend von dem Kolben zu entfernen, so dass die Kolbenstange bei der Rotation des Probengefäßes während der Messung nicht hinderlich ist.

In einer Ausgestaltung weist das transparente Röhrchen ein vorderes Ende und ein hinteres Ende auf und die Kolbenstange ist so bemessen, dass sie aus dem hinteren Ende des transparenten Röhrchens hervorsteht, wenn sie mit dem Kolben verbunden und derart in dem transparenten Röhrchen angeordnet ist, dass der Kolben bündig mit dem vorderen Ende des transparenten Röhrchens abschließt. Ein aus dem hinteren Ende des Röhrchens hervorstehender Abschnitt der Kolbenstange kann insbesondere als Griffabschnitt ausgebildet sein. Das Probengefäß kann bevorzugt bei ganz vorgeschobenem Kolben in eine Flüssigkeit eingetaucht werden. Dann kann der hervorstehende Abschnitt der Kolbenstange ergriffen und zurückgezogen werden, um die Flüssigkeit aufzunehmen. Lufteinschlüsse an der Innenseite des Röhrchens nahe einer Stirnfläche des Kolbens treten bei diesem Vorgehen in der Regel nicht auf, da Stirnfläche des Kolbens und vorderes Ende des Röhrchens beim Eintauchen in die Flüssigkeit eine ebene Fläche bilden, an der Luftbläschen keinen Halt finden.

An dem aus dem hinteren Ende des transparenten Röhrchens hervorstehenden Abschnitt der Kolbenstange kann ein Anschlag ausgebildet sein, der mit dem Röhrchen derart zusammenwirkt, dass ein noch tieferes Hineinschieben der Kolbenstange in das Röhrchen verhindert wird. Dadurch kann ein Benutzer den Kolben besonders einfach in die bündig mit dem vorderen Ende des Röhrchens abschließende Stellung bringen, indem er die Kolbenstange bis zum Anschlag in das Röhrchen hineinschiebt.

In einer Ausgestaltung ist zwischen dem Kolben und der Kolbenstange eine Schraubverbindung ausgebildet. In diesem Fall kann die Kolbenstange einfach aus dem Kolben herausgeschraubt werden, um sie von dem Kolben zu lösen und vom Probengefäß zu entfernen. Eine Schraubverbindung ist konstruktiv besonders einfach und erlaubt eine zuverlässige Übertragung von Zug- und Druckkräften.

In einer Ausgestaltung ist zwischen dem Kolben und der Kolbenstange ein Bajonettverschluss ausgebildet. Dies ermöglicht ebenfalls ein besonders einfaches Verbinden und Trennen von Kolben und Kolbenstange durch eine relative Drehung um einen vorgegebenen Winkel. Ein unbeabsichtigtes Verlagern des Kolbens beim Lösen der Kolbenstange kann dadurch vermieden werden.

In einer Ausgestaltung weist der Stopfen einen ersten Längsabschnitt auf, in dem ein Außendurchmesser des Stopfens von einem ersten Wert, der einem Innendurchmesser des transparenten Röhrchens entspricht, auf einen zweiten Wert, der geringer ist als der Innendurchmesser des transparenten Röhrchens, abnimmt. Der erste Längsabschnitt kann insbesondere konisch sein. Er kann sich über eine Länge erstrecken, die im Bereich zwischen 25 % und 200 % des Innendurchmessers des Röhrchens liegt, insbesondere im Bereich von 50 % bis 100 % des Innendurchmessers des Röhrchens. Ein solcher erster Längsabschnitt erleichtert nicht nur das Einsetzen des Stopfens in das Röhrchen, sondern wirkt zugleich unerwünschten Lufteinschlüssen entgegen, die sich beim Verschließen des Röhrchens bilden können.

In einer Ausgestaltung weist der Tropfen einen zweiten, zylindrischen Längsabschnitt auf, in dem ein Außendurchmesser des Stopfens so bemessen ist, dass er dichtend in das transparente Röhrchen einsetzbar ist. Der Stopfen dichtet also im Bereich einer Ringfläche ab, nicht nur an einer Kante der Öffnung des Endes des Röhrchens.

In einer Ausgestaltung weist der Stopfen einen stufenförmigen Anschlag auf, der an dem Ende des transparenten Röhrchens anliegt, wenn der Stopfen vollständig in das Ende des transparenten Röhrchens eingesetzt ist. Ein solcher Anschlag zeigt dem Benutzer an, dass der Stopfen korrekt eingesetzt ist und wirkt dadurch einer übermäßigen Kraftanwendung entgegen.

In einer Ausgestaltung weist der Stopfen eine in das transparente Röhrchen einsetzbare Stirnseite auf, in der eine Öffnung angeordnet ist, die mit einem innerhalb des Stopfens angeordneten Reservoir für die leichtere Flüssigkeit verbunden ist. Dadurch kann die leichtere Flüssigkeit durch die Öffnung in das Reservoir eingebracht werden, bevor der Stopfen in das transparente Röhrchen eingesetzt wird. Nach dem Einsetzen des Stopfens befindet sich die leichtere Flüssigkeit dann zunächst in dem Reservoir, von wo aus sie durch die Öffnung in die schwerere Flüssigkeit überführt werden kann, um dort einen zu vermessenden Tropfen auszubilden. Das Reservoir kann beispielsweise als Sackbohrung in der Stirnseite des Stopfens ausgebildet sein. Das offene Ende der Sackbohrung bildet dann die Öffnung in der Stirnseite. Reservoir und Öffnung können jedoch auch mit einer abweichenden Geometrie ausgeführt sein, beispielsweise mit einem sich mit zunehmendem Abstand von der Stirnseite aufweitenden oder verjüngenden Querschnitt.

Die oben angegebene Aufgabe wird ebenfalls gelöst durch das Verfahren mit den Merkmalen des Anspruchs 10. Vorteilhafte Ausgestaltungen sind in den sich anschließenden Unteransprüchen angegeben.

Das Verfahren dient zur Messung einer Grenzflächenspannung zwischen einer schwereren Flüssigkeit und einer leichteren Flüssigkeit und weist die folgenden Schritte auf:

- Bereitstellen eines transparenten Röhrchens, in dem ein Kolben angeordnet ist,

- Eintauchen eines vorderen Endes des transparenten Röhrchens in die schwerere Flüssigkeit und Zurückziehen des Kolbens,

- Einbringen der leichteren Flüssigkeit in das transparente Röhrchen,

- Verschließen der vorderen Öffnung des transparenten Röhrchens mit einem Stopfen,

- Versetzen des transparenten Röhrchens in Rotation um seine Längsachse, bis die leichtere Flüssigkeit einen langgestreckten Tropfen bildet, der allseitig von der schwereren Flüssigkeit umgeben ist,

- Messen einer geometrischen Eigenschaft des langgestreckten Tropfens.

Das Verfahren verwendet ein erfindungsgemäßes Probengefäß. Zur Erläuterung der Merkmale und Vorteile des Verfahrens wird daher zunächst auf die vorstehenden Erläuterungen des Probengefäßes verwiesen, die entsprechend gelten. Es versteht sich, dass die Schritte in der angegebenen Reihenfolge ausgeführt werden können, aber nicht müssen.

Die schwerere Flüssigkeit gelangt beim Zurückziehen des Kolbens in das transparente Röhrchen. Die leichtere Flüssigkeit wird ebenfalls in das transparente Röhrchen eingebracht, was auf unterschiedliche Art und Weise bewerkstelligt werden kann. Nach dem Zurückziehen des Kolbens und dem Verschließen der vorderen Öffnung des transparenten Röhrchens mit dem Stopfen sind beide Enden des Röhrchens verschlossen und die beiden Flüssigkeiten befinden sich innerhalb des Röhrchens. Durch die Rotation des Röhrchens um seine Längsachse bildet die leichtere Flüssigkeit einen langgestreckten Tropfen innerhalb der schwereren Flüssigkeit. Eine geometrische Eigenschaft des langgestreckten Tropfens wird gemessen, zum Beispiel auf optischem Wege. Die geometrische Eigenschaft kann insbesondere ein Durchmesser oder Radius des langgestreckten Tropfens sein. Die Eigenschaften des Tropfens können jedoch auch über andere Messwerte charakterisiert werden, beispielsweise über eine Kontur der Grenzfläche. Die Grenzflächenspannung kann dann auf Grundlage der gemessenen geometrischen Eigenschaft des langgestreckten Tropfens berechnet werden.

In einer Ausgestaltung ist an dem Kolben eine Kolbenstange befestigt, die nach dem Zurückziehen des Kolbens von dem Kolben gelöst und entfernt wird. Hierzu wird auf die vorstehenden Erläuterungen der korrespondierenden Vorrichtungsmerkmale verwiesen.

In einer Ausgestaltung schließt der Kolben beim Eintauchen des vorderen Endes des transparenten Röhrchens in die schwerere Flüssigkeit bündig mit dem vorderen Ende des transparenten Röhrchens ab oder steht aus dem vorderen Ende des transparenten Röhrchens hervor. Dadurch wird verhindert, dass beim Aufziehen der schwereren Flüssigkeit im Bereich einer Stirnfläche des Kolbens Lufteinschlüsse entstehen. Auch hierzu wird auf die vorstehenden Erläuterungen verwiesen.

In einer Ausgestaltung wird vor dem Verschließen des vorderen Endes des transparenten Röhrchens mit dem Stopfen die Anordnung des Kolbens derart justiert, dass sich eine Oberfläche der schwereren Flüssigkeit aus dem vorderen Ende des transparenten Röhrchens hervorwölbt. Dadurch wird verhindert, dass sich beim Einsetzen des Stopfens in das vordere Ende des Röhrchens Lufteinschlüsse bilden.

In einer Ausgestaltung wird die leichtere Flüssigkeit an einer Wandung des transparenten Röhrchens abgelegt. Um die leichtere Flüssigkeit auf diese Weise in das transparente Röhrchen einzubringen, kann insbesondere eine separate Spritze mit einer Kanüle verwendet werden.

In einer Ausgestaltung wird die leichtere Flüssigkeit in ein Reservoir, das in dem Stopfen ausgebildet ist, eingebracht. Beim Einsetzen des Stopfens in das transparente Röhrchen wird dadurch die leichtere Flüssigkeit ebenfalls in das transparente Röhrchen eingebracht. Hierzu wird auf die vorstehenden Erläuterungen der korrespondierenden Merkmale des Stopfens verwiesen.

Die Erfindung wird nachfolgend anhand von den Figuren dargestellten Ausführungsbeispielen näher erläutert. Es zeigen:

Fig. 1    ein erfindungsgemäßes Probengefäß,

Fig. 2    das Probengefäß aus Figur 1 nach dem Aufziehen einer schwereren Flüssigkeit,

Fig. 3    die Anordnung aus Figur 2 nach dem Lösen der Kolbenstange von dem Kolben und dem Einbringen einer leichteren Flüssigkeit,

Fig. 4    einen Stopfen,

Fig. 5    das Probengefäß aus Figur 1 nach dem Einsetzen des Stopfens aus Figur 4,

Fig. 6    ein weiteres Ausführungsbeispiel eines Stopfens,

Fig. 7    den Stopfen aus Figur 6 nach dem Einbringen der leichteren Flüssigkeit in ein Reservoir des Stopfens,

Fig. 8    eine Schraubverbindung zur lösbaren Verbindung von Kolben und Kolbenstange,

Fig.9    einen Bajonettverschluss zur lösbaren Verbindung von Kolben und Kolbenstange.

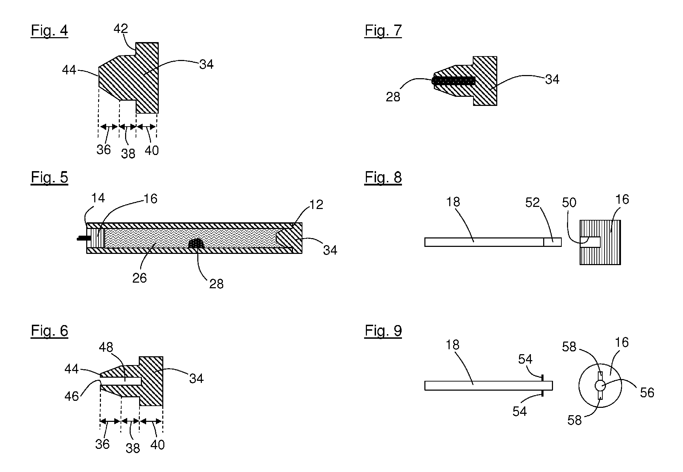

Alle Figuren sind schematische Schnittdarstellungen, mit Ausnahme des rechten Teils der Figur 9, bei dem es sich um eine Draufsicht handelt.

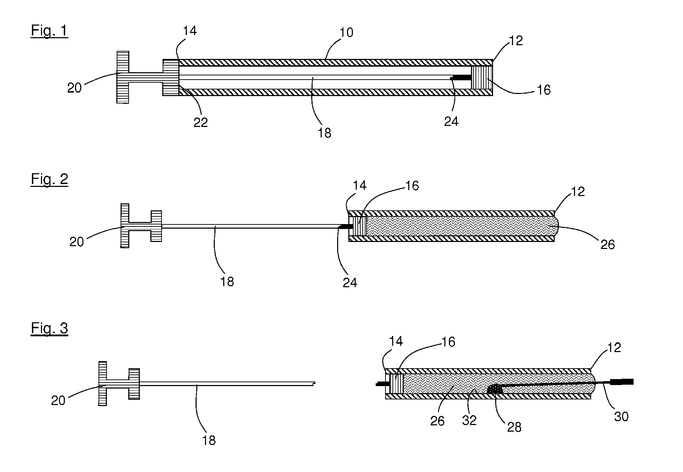

Fig. 1 zeigt ein transparentes Röhrchen 10 eines Probengefäßes. Es weist einen über seine gesamte Länge gleichmäßigen Innendurchmesser auf. Das Röhrchen 10 besteht aus Glas mit einer relativ großen Wandstärke und ist präzisionsgefertigt, so dass es für eine Rotation mit hohen Drehzahlen von über 200 Umdrehungen pro Minute geeignet ist. Das Röhrchen 10 weist ein vorderes Ende 12 und ein hinteres Ende 14 auf und ist an diesen beiden Enden offen.

In dem Röhrchen 10 ist ein Kolben 16 verschieblich angeordnet. Der Kolben 16 weist einen Außendurchmesser auf, der dem Innendurchmesser des Röhrchens 10 entspricht, so dass er dichtend darin verlagert werden kann. Die Länge des Kolbens 16 entspricht etwa dem Innendurchmesser des Röhrchens 10.

Der Kolben 16 ist mit einer Kolbenstange 18 verbunden, die an ihrem hinteren Ende einen Griffabschnitt 20 aufweist. Der Griffabschnitt 20 weist eine vordere Stirnfläche 22 auf, die in der gezeigten Stellung des Kolbens 16, in der dieser bündig mit dem vorderen Ende 12 des Röhrchens 10 abschließt, an dem hinteren Ende 14 des Röhrchens 10 anliegt. Der dadurch gebildete Anschlag verhindert, dass der Kolben weiter vorgeschoben wird, als in der Figur gezeigt. Zwischen Kolben 16 und Kolbenstange 18 besteht eine lösbare Verbindung 24, die in der Figur nur schematisch angedeutet ist.

Zum Einbringen der schwereren Flüssigkeit in das Röhrchen 10 kann die in der Fig. 1 gezeigte Anordnung mit dem vorderen Ende 12 des Röhrchens 10 in die aufzunehmende Flüssigkeit eingetaucht und anschließend kann die Kolbenstange 18 zurückgezogen werden. Dadurch ergibt sich die in der Fig. 2 gezeigte Anordnung, bei der der gesamte Innenraum des Röhrchens 10 zwischen Kolben 16 und vorderem Ende 12 vollständig mit der schwereren Flüssigkeit 26 gefüllt ist. Zusätzlich wurde, nach dem Entnehmen der Anordnung aus der Flüssigkeit, der Kolben 16 wieder geringfügig nach vorn vorgeschoben, so dass sich die schwerere Flüssigkeit 26 am vorderen Ende 12 aus der Öffnung des Röhrchens 10 hervorwölbt.

Fig. 3 zeigt die Anordnung der Fig. 2 nach dem Lösen der lösbaren Verbindung 24 zwischen Kolbenstange 18 und Kolben 16. Für die weiteren Schritte wird die Kolbenstange 18 nicht mehr benötigt und von dem Röhrchen 10 entfernt. Im rechten Teil der Fig. 3 ist dargestellt, wie die leichtere Flüssigkeit 28 eingebracht wird. Dies geschieht mit Hilfe einer Spritze, von der lediglich die Kanüle 30 dargestellt ist. Diese wird durch die Öffnung am vorderen Ende 12 des Röhrchens 10 in das Röhrchen 10 eingeführt. Ein Tropfen der leichteren Flüssigkeit 28 wird an der Wandung 32 des Röhrchens 10, etwa in der Mitte des Röhrchens 10 und an dessen Innenseite, abgelegt.

Bevor das vordere Ende 12 des Röhrchens 10 mit dem in Fig. 4 dargestellten Stopfen 34 verschlossen wird, wird die Spritze mit Kanüle 30 entfernt. Der Stopfen 34 weist einen konischen, ersten Längsabschnitt 36, einen zylindrischen, zweiten Längsabschnitt 38 und einen ebenfalls zylindrischen, dritten Längsabschnitt 40 auf. Der Außendurchmesser des zweiten Längsabschnitts 38 entspricht dem Innendurchmesser des Röhrchens 10, so dass die zylindermantelförmige Außenfläche des zweiten Längsabschnitts 38 dichtend in das Röhrchen 10 eingesetzt werden kann.

Im ersten Längsabschnitt 36 verjüngt sich der Außendurchmesser des Stopfens 34 von dem Durchmesser des zweiten Längsabschnitts 38 bis zu einem geringeren Durchmesser, den eine Stirnseite 44 am von dem dritten Längsabschnitt 40 entfernten Ende des ersten Längsabschnitts 36 aufweist. Die Länge des ersten Längsabschnitts 36 liegt im Bereich zwischen 25 % und 200 % des Innendurchmessers des Röhrchens 10 bzw. des Außendurchmessers des zweiten Längsabschnitts 38. Der dritte Längsabschnitt 40 weist einen größeren Durchmesser auf als der zweite Längsabschnitt 38, wobei zwischen dem zweiten Längsabschnitt 38 und dem dritten Längsabschnitt 40 ein stufenförmiger Anschlag 42 ausgebildet ist.

Fig. 5 zeigt das Röhrchen 10 mit den beiden darin angeordneten Flüssigkeiten 26, 28 nach dem Einsetzen des Stopfens 34. Das Röhrchen 10 ist mit dem Stopfen 34 dicht verschlossen. Der Innenraum des Röhrchens 10 zwischen dem Kolben 16 und dem Stopfen 34 ist vollständig mit Flüssigkeit gefüllt. In diesem Zustand kann die in der Fig. 5 gezeigte Anordnung in schnelle Rotation versetzt werden, um auf Grundlage des Durchmessers oder einer sonstigen geometrischen Eigenschaft eines sich ausbildenden, langgestreckten Tropfens der leichteren Flüssigkeit 28 eine Grenzflächenspannung zwischen den beiden Flüssigkeiten 26, 28 zu bestimmen.

Fig. 6 zeigt ein anderes Beispiel eines Stopfens 34, der ebenfalls die drei anhand der Fig. 4 erläuterten Längsabschnitt 36, 38, 40 und einen stufenförmigen Anschlag 42 aufweist. Abweichend von dem Stopfen 34 der Fig. 4 ist in der Stirnseite 44 des Stopfens 34 aus Fig. 6 eine Öffnung 46 ausgebildet, und innerhalb des Stopfens 34 befindet sich ein Reservoir 48, dass mit der Öffnung 46 verbunden ist. Die Öffnung 46 und das Reservoir 48 sind von einer Sackbohrung in der Stirnseite 44 des Stopfens 34 gebildet. Das Reservoir 48 kann durch die Öffnung 46 mit der leichteren Flüssigkeit 28 gefüllt werden, beispielsweise wiederum unter Verwendung einer Spritze mit einer Kanüle.

Fig. 7 zeigt den auf diese Weise mit einer leichteren Flüssigkeit 28 gefüllten Stopfen 34. Dieser kann einschließlich der aufgenommenen, leichteren Flüssigkeit 28 in ein bereits mit der schwereren Flüssigkeit 26 gefülltes Röhrchen 10 eingesetzt werden, wodurch zugleich die leichtere Flüssigkeit 28 in das Röhrchen 10 eingebracht wird.

Fig. 8 zeigt eine Schraubverbindung als Beispiel einer lösbaren Verbindung 24 zwischen Kolben 16 und Kolbenstange 18. Der Kolben 16 ist mit einem Innengewinde 50 und das vordere Ende der Kolbenstange 18 mit einem Außengewinde 52 versehen. In einer in den Figuren nicht gezeigten Alternative kann der Kolben mit einem Stangenansatz versehen sein, der ein Außengewinde aufweist, mit der er in ein Innengewinde am Ende der Kolbenstange eingeschraubt werden kann.

Fig. 9 zeigt als ein weiteres Beispiel einer lösbaren Verbindung 24 zwischen einer Kolbenstange 18 und einem Kolben 16 einen Bajonettverschluss. Dieser weist zwei gegenüberliegend angeordnete Stifte 54 am vorderen Ende der Kolbenstange 18 auf, die relativ zu der Kolbenstange 18 radial angeordnet sind. Der in einer Draufsicht auf die Stirnseite schematisch dargestellte Kolben 16 weist eine Öffnung 56 auf, in die die Kolbenstange 16 eingesteckt werden kann, und zwei seitlich davon radial angeordnete Schlitze 58, durch die die Stifte 54 eingeführt werden können. Durch Verdrehen der Kolbenstange 18 relativ zu dem Kolben 16 können die Stifte 54 im Inneren des Kolbens 16 verriegelt werden.

Liste der verwendeten Bezugszeichen:

| 10 | Röhrchen |
|---|---|
| 12 | vorderes Ende |
| 14 | hinteres Ende |
| 16 | Kolben |
| 18 | Kolbenstange |
| 20 | Griffabschnitt |
| 22 | Stirnfläche |
| 24 | lösbare Verbindung |
| 26 | schwerere Flüssigkeit |
| 28 | leichtere Flüssigkeit |
| 30 | Kanüle |
| 32 | Wandung |
| 34 | Stopfen |
| 36 | erster Längsabschnitt |
| 38 | zweiter Längsabschnitt |
| 40 | dritter Längsabschnitt |
| 42 | stufenförmiger Anschlag |
| 44 | Stirnseite |
| 46 | Öffnung |
| 48 | Reservoir |

50    Innengewinde
52    Außengewinde
54    Stifte
56    Öffnung
58    Schlitze

**Patentansprüche**

1. Probengefäß zur Messung einer Grenzflächenspannung zwischen einer schwereren Flüssigkeit (26) und einer leichteren Flüssigkeit (28) nach einem Spinning Drop-Verfahren mit

    • einem transparenten Röhrchen (10), das zur Rotation um seine Längsachse mit einer Drehzahl von 200 Umdrehungen pro Minute oder mehr auslegt ist, und
    • einem Stopfen (34), mit dem ein Ende des transparenten Röhrchens (10) verschließbar ist, **gekennzeichnet durch**
    • einen in dem transparenten Röhrchen (10) verschieblichen Kolben (16).

2. Probengefäß nach Anspruch 1, **gekennzeichnet durch** eine Kolbenstange (18), die lösbar mit dem Kolben (16) verbunden ist.

3. Probengefäß nach Anspruch 2, **dadurch gekennzeichnet, dass** das transparente Röhrchen (10) ein vorderes Ende (12) und ein hinteres Ende (14) aufweist und die Kolbenstange (18) so bemessen ist, dass sie aus dem hinteren Ende (14) des transparenten Röhrchens (10) hervorsteht, wenn sie mit der Kolbenstange (18) verbunden und der Kolben (16) derart in dem transparenten Röhrchen (10) angeordnet ist, dass er bündig mit dem vorderen Ende (12) des transparenten Röhrchens (10) abschließt.

4. Probengefäß nach Anspruch 2 oder 3, **dadurch gekennzeichnet, dass** zwischen dem Kolben (16) und der Kolbenstange (18) eine Schraubverbindung ausgebildet ist.

5. Probengefäß nach Anspruch 2 oder 3, **dadurch gekennzeichnet, dass** zwischen dem Kolben (16) und der Kolbenstange (18) ein Bajonettverschluss ausgebildet ist.

6. Probengefäß nach einem der Ansprüche 1 bis 5, **dadurch gekennzeichnet, dass** der Stopfen (34) einen ersten Längsabschnitt (36) aufweist, in dem ein Außendurchmesser des Stopfens (34) von einem ersten Wert, der einem Innendurchmesser des transparenten Röhrchens (10) entspricht, auf einen zweiten Wert, der geringer ist als der Innendurchmesser des transparenten Röhrchens (10), abnimmt.

7. Probengefäß nach einem der Ansprüche 1 bis 6, **dadurch gekennzeichnet, dass** der Stopfen (34) einen zylindrischen, zweiten Längsabschnitt (38) aufweist, in dem ein Außendurchmesser des Stopfens (34) so bemessen ist, dass er dichtend in das transparente Röhrchen (10) einsetzbar ist.

8. Probengefäß nach einem der Ansprüche 1 bis 7, **dadurch gekennzeichnet, dass** der Stopfen (34) einen stufenförmigen (42) Anschlag aufweist, der an dem Ende des transparenten Röhrchens (10) anliegt, wenn der Stopfen (34) vollständig in das Ende des transparenten Röhrchens (10) eingesetzt ist.

9. Probengefäß nach einem der Ansprüche 1 bis 8, **dadurch gekennzeichnet, dass** der Stopfen (34) eine in das transparente Röhrchen (10) einsetzbare Stirnseite (44) aufweist, in der eine Öffnung (46) angeordnet ist, die mit einem innerhalb des Stopfens (34) angeordneten Reservoir (48) für die leichtere Flüssigkeit (28) verbunden ist.

10. Verfahren zur Messung einer Grenzflächenspannung zwischen einer schwereren Flüssigkeit (26) und einer leichteren Flüssigkeit (28) mit den folgenden Schritten:

    • Bereitstellen eines transparenten Röhrchens (10), in dem ein Kolben (16) angeordnet ist,
    • Eintauchen eines vorderen Endes (12) des transparenten Röhrchens (10) in die schwerere Flüssigkeit (26) und Zurückziehen des Kolbens (16),
    • Einbringen der leichteren Flüssigkeit (28) in das transparente Röhrchen (10),
    • Verschließen der vorderen Öffnung (12) des transparenten Röhrchens (10) mit einem Stopfen (34),
    • Versetzen des transparenten Röhrchens (10) in Rotation um seine Längsachse, bis die leichtere Flüssigkeit (28) einen langgestreckten Tropfen bildet, der allseitig von der schwereren Flüssigkeit (26) umgeben ist,
    • Messen einer geometrischen Eigenschaft des langgestreckten Tropfens.

11. Verfahren nach Anspruch 10, **dadurch gekennzeichnet, dass** an dem Kolben (16) eine Kolbenstange (18) befestigt ist, die nach dem Zurückziehen des Kolbens (16) von dem Kolben (16) gelöst und entfernt wird.

12. Verfahren nach Anspruch 10 oder 11, **dadurch gekennzeichnet, dass** der Kolben (16) beim Eintauchen des vorderen Endes (12) des transparenten Röhrchens (10) in die schwerere Flüssigkeit (26) bündig mit dem vorderen Ende (12) des transparenten Röhrchens (10) abschließt oder aus dem vorderen Ende (12) des transparenten Röhrchens (10) hervorsteht.

13. Verfahren nach einem der Anspruch 10 bis 12, **dadurch gekennzeichnet, dass** vor dem Verschließen des vorderen Endes (12) des transparenten Röhrchens (10) mit dem Stopfen (34) die Anordnung des Kolbens (34) derart justiert wird, dass sich eine Oberfläche der schwereren Flüssigkeit (26) aus dem vorderen Ende (12) des transparenten Röhrchens (10) herauswölbt.

14. Verfahren nach einem der Ansprüche 10 bis 13, **dadurch gekennzeichnet, dass** die leichtere Flüssigkeit (28) an einer Wandung (32) des transparenten Röhrchens (10) abgelegt wird.

15. Verfahren nach einem der Ansprüche 10 bis 13, **dadurch gekennzeichnet, dass** die leichtere Flüssigkeit (28) in ein Reservoir (48), das in dem Stopfen (34) ausgebildet ist, eingebracht wird.

Fig. 1

Fig. 2

Fig. 3

Fig. 4

Fig. 7

Fig. 5

Fig. 8

Fig. 6

Fig. 9

Europäisches
Patentamt

European
Patent Office

Office européen
des brevets

**EUROPÄISCHER RECHERCHENBERICHT**

Nummer der Anmeldung

EP 15 16 6959

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 150 607 A (JOSEPH DANIEL D [US] ET AL) 29. September 1992 (1992-09-29) | 1-9 | INV.<br>G01N13/02<br>B01L3/00 |
| A | * Spalte 2, Zeile 35 - Spalte 4, Zeile 60; Abbildungen 1,4,6,9 * | 10-15 | |
| | ----- | | |
| X | MARTIN J D ET AL: "Unusual behavior of PEG/PPG/Pluronic interfaces studied by a spinning drop tensiometer", JOURNAL OF COLLOID AND INTERFACE SCIENCE, ACADEMIC PRESS, NEW YORK, NY, US, Bd. 322, Nr. 2, 15. Juni 2008 (2008-06-15), Seiten 669-674, XP022659389, ISSN: 0021-9797, DOI: 10.1016/J.JCIS.2008.03.050 [gefunden am 2008-04-08] | 1-9 | |
| A | * Absatz [0002]; Abbildung 1 * | 10-15 | |
| | ----- | | |
| X | VERDIER C ET AL: "High temperature interfacial tension measurements of PA6/PP interfaces compatibilized with copolymers using a spinning drop tensiometer", POLYMER, ELSEVIER SCIENCE PUBLISHERS B.V, GB, Bd. 41, Nr. 17, 1. August 2000 (2000-08-01), Seiten 6683-6689, XP004196890, ISSN: 0032-3861, DOI: 10.1016/S0032-3861(00)00059-8 | 1-9 | RECHERCHIERTE SACHGEBIETE (IPC)<br><br>B01L<br>G01N |
| A | * Absatz [02.3]; Abbildungen 2-3 * | 10-15 | |
| | ----- | | |
| X | US 4 133 863 A (KOENIG ELMER A) 9. Januar 1979 (1979-01-09) | 1-9 | |
| A | * Spalte 3, Zeile 29 - Spalte 5, Zeile 10; Abbildung 2 * | 10-15 | |
| | ----- | | |
| A | US 4 250 741 A (SCRIVEN II L EDWARD ET AL) 17. Februar 1981 (1981-02-17) * Spalte 3, Zeile 47 - Spalte 2, Zeile 19; Abbildung 2 * | 1-15 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 12. Oktober 2015 | van Lith, Joris |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    ...................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 16 6959

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2015

| Im Recherchenbericht angeführtes Patentdokument | Datum der Veröffentlichung | Mitglied(er) der Patentfamilie | Datum der Veröffentlichung |
|---|---|---|---|
| US 5150607 A | 29-09-1992 | KEINE | |
| US 4133863 A | 09-01-1979 | KEINE | |
| US 4250741 A | 17-02-1981 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 201583475 U